# EUROPEAN PATENT APPLICATION

(11) **EP 2 262 155 A2**
(43) Date of publication of application: **15.12.2010**
(21) Application number: 10162988.9
(22) Date of filing: 17.05.2010
(51) Int. Cl.: H04L 1/18

(54) **TCP data throughout enhancement for WLAN clients on a wireless LAN router**

(30) Priority: 13.11.2009 US 618628; 15.05.2009 US 178926 P
(71) Applicant: Novatel Wireless, Inc, San Diego, CA 92121 (US)
(72) Inventor: Lee, Yong Sang, San Diego, CA 92128 (US); Kim, Seong Beom, San Diego, CA 92131 (US); Wu, John, San Diego, CA 92127 (US); Carlisle, Matthew, Seattle, WA 98122 (US); You, Gwan Hee, San Diego, CA 92127 (US)
(74) Representative: Winter, Brandl, Fürniss, Hübner, Röss, Kaiser, Polte - Partnerschaft

(57) **Abstract**

A server may be bypassed in the context of retransmitting data packets, when such data packets are missing or lost due to interference or some other network error. Decreased throughput and other disadvantages associated with data packet retransmission are avoided by negating the need to transmit retransmission request packets to the server and retransmitting a missing/lost data packet from the server. Instead, retransmission request packets may be sent to a router, and the router may respond by directly retransmitting the missing/lost data packet to the client, where prior to retransmitting the missing/lost data packet, it is determined whether the data packet is a Transport Control Protocol or User Datagram Protocol packet, and proceeding with the retransmitting only if the data packets is a Transport Control Protocol packet.

## Description

### FIELD OF THE INVENTION

The present invention relates generally to the field of wireless communication. In particular, various embodiments relate to the retransmission of missing packets directly to a client.

### BACKGROUND OF THE INVENTION

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

In recent years, wireless networks have emerged as flexible and cost-effective alternatives to conventional wired local area networks (LANs). Wireless networks, such as wireless LANs (WLANs) are gaining in popularity at the office and in the home, where people are gravitating toward use of laptops and handheld devices that they can carry with them while they do their jobs or move from the living room to the bedroom. Additionally, WLANs have increased in popularity due to the ease of installation in comparison to wired LANs.

Wireless communication systems adapted for use in homes and office buildings typically include an access point coupled to an interactive data network (e.g., Internet) through a high-speed connection, such as a digital subscriber line (DSL) or cable modem. The access point is usually configured to have sufficient signal strength to transmit data to and receive data from remote terminals or client devices located throughout the building. For example, a portable computer in a house may include a PCMCIA card with a wireless transceiver that allows it to receive and transmit data via the access point. Data exchanged between wireless client devices and access points is generally sent in packet format. Data packets may carry information such as source address, destination address, synchronization bits, data, error correcting codes, etc.

A variety of wireless communication protocols for transmitting packets of information between wireless devices and access points have been adopted throughout the world. For example, in the United States, IEEE specification 802.11 and the Bluetooth wireless protocol have been widely used for industrial applications. IEEE specification 802.11, and Industrial, Scientific, and Medical (ISM) band networking protocols typically operate in the 2.4 GHz or 5 GHz frequency bands. In Europe, a standard known as HIPERLAN is widely used. The Wireless Asynchronous Transfer Mode (WATM) standard is another protocol under development. This latter standard defines the format of a transmission frame, within which control and data transfer functions can take place. The format and length of transmission frames may be fixed or dynamically variable.

In a manner similar to the wireless router described above, fixed wireless systems involve systems that are capable of enabling wireless communication, however fixed wireless systems also generally connect to the interactive data network through a broadband wireless connection. Fixed wireless systems are referred to as "fixed" because they are typically situated in fixed locations. Unlike the mobile devices, such as portable telephones and personal digital assistants that can be configured to connect to a wireless router, fixed wireless devices can be much larger in size, less mobile, and can include devices such as desktop personal computers.

Although having an enormous amount of potential, fixed wireless communication has traditionally lagged wired systems in both usefulness and popularity. A primary contributing factor for this phenomenon has been the fact that data transmission in wired systems has far exceeded data transmission in wireless systems. In the past, data transmission rates for fixed wireless systems have lagged Integrated Services Digital Network (ISDN) transmission rates or even dial-up transmission rates across conventional telephone lines.

However, the obstacles to using fixed wireless systems are rapidly being overcome. With the advent of Third Generation Wireless (3G) technologies, Universal Mobile Telecommunications System (UMTS)/Wideband Code Division Multiple Access (WCDMA) technologies in Europe, and Evolution Data Only (1xEVDO) technologies in North America, fixed wireless has become a viable option for wireless broadband access in the home as part of the overall operator's 3G portfolio. Already, fixed wireless systems are capable of downlink throughput access rates in the hundreds of kilobits per second, and megabit rates will be widely available in the near future. As a result of these advances fixed wireless access through UMTS, High Speed Packet Data Access (HSDPA) or 1xEVDO is rapidly becoming a superior choice to ISDN or dial-up systems. In fact, some or all of these systems will equal or surpass the transmission rates of digital subscriber line (DSL) systems in the not-too-distant future.

As fixed wireless systems continue to increase in quality and performance, improved "gateway" products become increasingly important. Wireless gateway products are needed to permit fixed wireless devices such as personal computers, peripheral devices and other devices within a LAN to access and communicate with larger, wide area networks (WANs). As transmission rates continue to increase, wireless gateway devices must be able to manage more and more wireless-capable devices while maintaining high transmission rates among the devices and the larger networks.

Conventional or legacy applications such as, e.g., email, or Internet access, still utilize transport-layer protocols, such as the Transmission Control Protocol (TCP) for end-to-end data delivery. TCP is the standard protocol utilized for reliable data delivery, and is reliant upon the Internet Protocol (IP) for routing and data transmission. IP is a "best-effort" service. User Datagram Protocol (UDP) is the standard transport layer protocol utilized for, e.g., real-time audio and/or video traffic. However, degradation of TCP performance can occur over wireless networks, such as WLANs, due to packet loss resulting from packet corruption , interference, etc., which is often interpreted as network congestion. That is, TCP utilizes an acknowledgement mechanism to ensure reliable/correct packet transfer. For example, a TCP sender transmits a sequence number, N, with every data byte it transmits and starts a timer, so that a TCP receiver/endpoint may send back (immediately or after some delay) an acknowledgement (ACK) to the TCP sender upon receipt of a packet. The ACK indicates a next expected sequence number, N+1. If the timer expires before an ACK is received, however, the TCP sender retransmits the outstanding packet (the packet to which an ACK was not received).

As described above, TCP packet loss can be interpreted as signal of network congestion. Conventional approaches to handling packet loss include, e.g., utilizing window-based flow control to reduce congestion, by reducing the size of the window for retransmission. However, such measures can significantly throttle throughput. Interference, as also described above, can contribute to packet loss, resulting in high retransmission rates and again, resulting in reduced throughput and reduced bandwidth utilization.

In the case of, e.g., a 3G router with WLAN clients, the 3G router may be configured to support two types of connection methods, i.e., a tethered mode, and a standalone mode. With regard to the tethered mode, a Universal Serial Bus (USB) connection may be utilized, while a WLAN (e.g., IEEE 802.11 b/g) connection may be used for the standalone mode. The standalone mode will have "poorer" TCP throughput compared to the tethered mode because of potential WLAN interference. That is, if WLAN interference exists, a packet from the 3G router to be sent to a client may be lost. If the WLAN client does not receive a packet for any reason, e.g., interference, from a server, the WLAN client will request retransmission by sending a retransmission request for the missing packet to the server. The retransmission request packet then is sent to the server, whereupon the server resends the missing packet. If, however, the server is connected to the client via a 3G Wide Area Network (WAN), a delay occurs due to the time it takes to receive the retransmission request packet in WANs.

Further to the above, although the wireless layer implements a retry scheme, UDP and TCP packets are not distinguished from one another. Hence, increasing a retry count would serve to increase TCP performance, but would also result in the poor performance of UDP throughput due to retry delay. That is, while, e.g., conventional Wifi access points may retransmit packets, the packets to be retransmitted are not checked to determine whether they are UDP or TCP packets and thus, the UDP packets are also retransmitted.

### SUMMARY OF THE INVENTION

Various embodiments relate to a method of, an electronic apparatus for, and a computer program product configured to perform data packet retransmission, where a data packet to be received is determined as missing. A request packet to request retransmission of the data packet is transmitted to a router. The retransmitted data packet is received directly from the router.

Various embodiments also relate to a method of, an electronic apparatus for, and a computer program product configured to data packet retransmission, where a data packet is received and saved. A retransmission request packet indicative of a request to retransmit the data packet is then received, whereupon the data packet is retransmitted in response to the request.

Still other embodiments relate to a system of data packet retransmission. The system comprises a server configured to transmit a data packet. Moreover, the system comprises a router configured to receive the data packet from the server, and store the data packet. Further still, the system comprises a wireless Local Area Network client configured to receive the data packet upon a determination that the data packet is missing, the data packet being retransmitted directly from the router and in response to a retransmission request packet transmitted from the wireless Local Area Network client to the router.

In accordance with various embodiments, decreased throughput and/or other disadvantages associated with data packet retransmission are avoided by negating the need to transmit retransmission request packets to a server and retransmitting a missing/lost data packet from the server. Instead, retransmission request packets may be sent to the router, and the router may respond by directly retransmitting the missing/lost data packet to the client.

These and other advantages and features of various embodiments of the present invention, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

Embodiments of the invention are described by referring to the attached drawings, in which:

Figure 1 is an overview diagram of a system within which various embodiments may be implemented;

Figure 2 is an exemplary conventional retransmission message flow diagram;

Figure 3 is an exemplary retransmission message flow diagram in accordance with various embodiments;

Figure 4a is a flow chart illustrating exemplary processes performed for data packet retransmission from a client perspective in accordance with various embodiments;

Figure 4b is a flow chart illustrating exemplary processes performed for data packet retransmission from a router perspective in accordance with various embodiments.

### DETAILED DESCRIPTION OF VARIOUS EMBODIMENTS

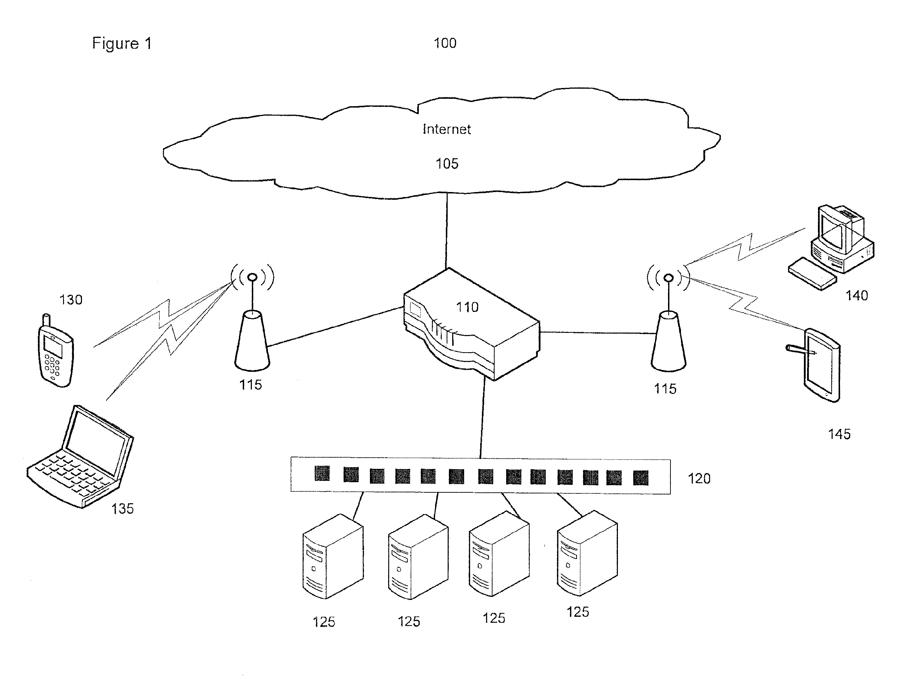

Various embodiments are directed to enhancing speed and throughput in a network, e.g., WLAN network, by sending retransmission packets to a client from a router instead of a server, wherein the retransmission of packets is selectively, i.e., TCP packets may be retransmitted while UDP packets are not. Figure 1 is an overview diagram of a system 100 within which various embodiments may be implemented. System 100 includes the Internet 105 or some other data network through which various system elements/devices may communicate. A router 110 is illustrated as being communicatively connected between the Internet 105 and one or more servers 125 via, e.g., a wired LAN or other network backbone 120. The one or more servers 125 may comprises email servers, File Transfer Protocol (FTP) servers, etc. Electronic devices, such as smartphone 130, laptop computer 135, workstation 140, and/or tablet 145 may communicate and transmit/receive data in the form of packets therebetween.

If an electronic device, such as laptop computer 135 wishes to transmit data, such as an email message through the Internet 105 to tablet 145, the laptop computer communicates with a wireless access point 115, whereupon the data is transmitted between one or more server 125 and the router 110, through the Internet 105, and ultimately to the tablet 145. As another example, the workstation 140 may desire to connect with one of the servers 125, e.g., an FTP server, through the router 110 in order to perform a file transfer. It should be noted that the number of routers 110, servers 125, and access point 115 illustrated in Figure 1 are merely exemplary and more or less system elements, such as routers, servers, communication or networked devices may be present and/or utilized in accordance with various embodiments.

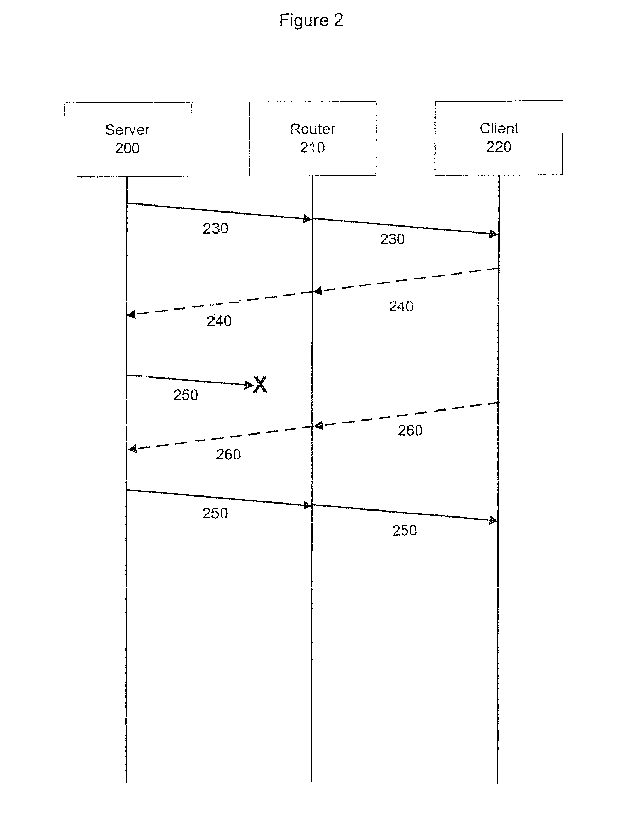

The data to be sent and/or received (including control or routing data) may be broken up into one or more data packets for transmission. Figure 2 is an exemplary message flow diagram between a server 200, router 210, and client 220, where the client may comprise one or more of the aforementioned communication or networked devices. A first packet 230 is sent to the router 210 for transmittal to the client 220. Upon receipt of the first packet 230, the client 220 returns an acknowledgment (ACK) 240 back to the server 200 via the router 210. A second packet 250 may then be transmitted from the server 200. However, in this instance, the second packet 250 may be lost due to, e.g., interference, collision, or some other network error. Upon determining that the second packet 250 has not yet been received, the client 220 transmits a retransmission request packet 260 back to the server 200 via the router 210 requesting that the second packet 250 be resent to the client 220. Upon receipt of the retransmission request packet 260, the server 200 retries sending the second packet 250 to the client 220 via the router 210.

As described above, the retransmission scheme illustrated in Figure 2 may result in decreased throughput due to, e.g., retransmission delay, if for example, the server 200 is communicatively connected to the client 220 via a WLAN, such as a 3G WAN. First, 3G WAN may be considered to be a relatively slow communication method. Second, the retransmission request packet 260 must be sent from the client 220, to the router 210, and ultimately to the server 200, where the retransmitted packet 250 must be sent back to the router 210, and ultimately to the client 220. Third, and as described above, retransmission may be unselective, e.g., no determination is made as to whether the retransmitted packet 250 is a TCP or UDP packet, and both types of packets are retransmitted, causing slowness or delay in, e.g., the streaming of video or audio that utilizes UDP.

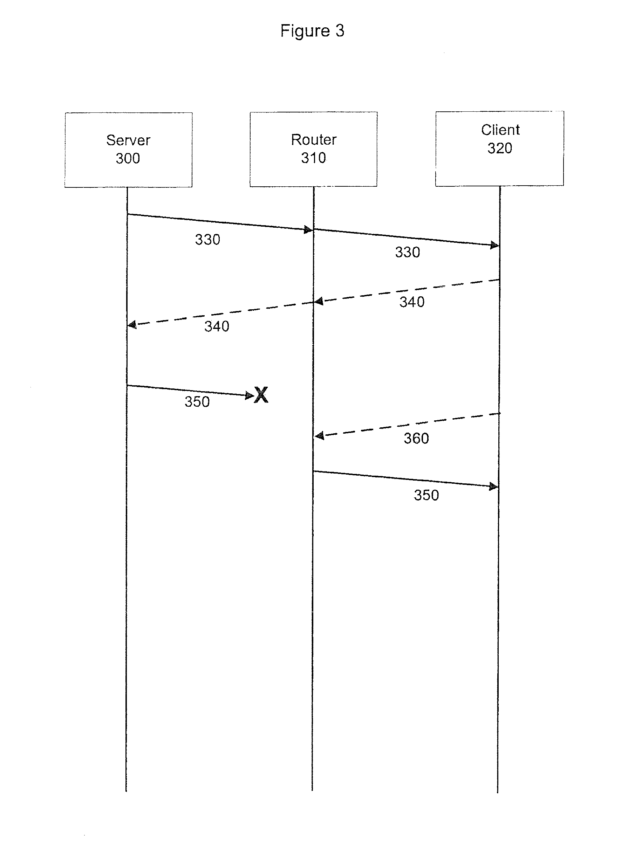

Figure 3 is an exemplary message flow diagram illustrating a retransmission scheme in accordance with various embodiments. A server 300 may transmit a first packet 330 to a router 310, whereupon the router forwards the first packet 330 to a client 320. Upon receipt of the first packet 330, the client 320 returns an ACK (e.g., a TCP ACK packet) back to the server 300 via the router 310. The server 300 may transmit a second packet 350 that is bound for the client 320, but, e.g., due to some interference or some other network transmission error, the second packet 350 is lost. Upon determining that the second packet 350 has not been received by the client 320, the client 320 transmits a retransmission request packet 360 to the router 310. However, instead of forwarding the retransmission request packet 360 to the server 300, the router 310 itself retransmits the second packet 350 directly to the client 320.

In order to effectuate various embodiments, where the router 310 is able to "bypass" the involvement of the server 310 during a retransmission scenario, the router 310 captures or saves all of the data (e.g., TCP packets) that is sent to it by the server 300 in RAM buffer or other similar memory. It should be further noted that various embodiments may be implemented so that only TCP packets are affected. That is, prior to retransmission, it is determined whether the packets to be retransmitted are TCP or UDP packets, where only TCP packets are retransmitted and UDP packets will not be subject to the retransmission scheme described herein.

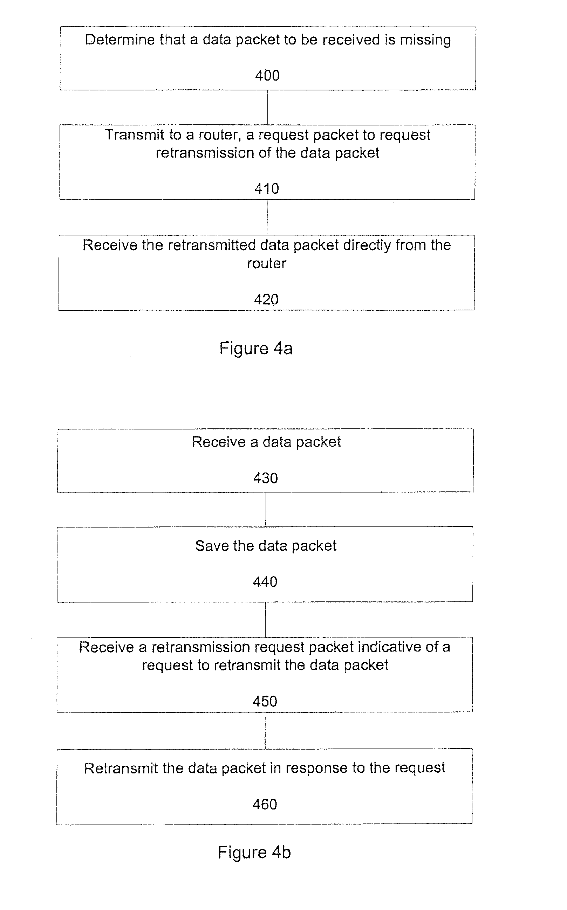

Figure 4a is a flow chart illustrating exemplary processes performed for the retransmission of data packets from a client perspective in accordance with various embodiments. At 400, it is determined, e.g., at a WLAN client, that a data packet to be received is missing. For example, and as described above, if a data packet has not yet been received prior to termination of a timer, or within a specified window, the data packet is deemed missing or lost. The data packet may comprise, e.g., a TCP packet. At 410, a request packet is transmitted to a router, where the request packet is indicative of a request for the retransmission of the data packet. The request packet may comprise, e.g., a TCP ACK packet. At 420 and in response to the request for retransmission, the data packet is retransmitted directly from the router.

Figure 4b is a flow chart illustrating exemplary processes performed for the retransmission of data packets from a router perspective in accordance with various embodiments. At 430 a data packet is received, e.g., from a server. At 440, the data packet is saved, e.g., at a buffer or some other type of memory resident at or within the router. At 450, a retransmission request packet is received where the retransmission request packet is indicative of a request to retransmit the data packet. For example, the retransmission request packet may be received from a WLAN client, which has determined that the data packet (it is supposed to receive) is missing or lost due to, e.g., interference, network error, collision, etc. At 460, the data packet is retransmitted in response to the request. That is, the data packet saved at the router may be directly retransmitted from the router to the WLAN client.

Various embodiments of may be implemented in a system having multiple communication devices that can communicate through one or more networks. The system may comprise any combination of wired or wireless networks such as a mobile telephone network, a WLAN, a Bluetooth personal area network, an Ethernet LAN, a WAN, the Internet, etc.

Communication devices may include a mobile telephone, a personal digital assistant (PDA), a notebook computer, etc. The communication devices may be located in a mode of transportation such as an automobile. The communication devices may communicate using various transmission technologies such as Code Division Multiple Access (CDMA), Global System for Mobile Communications (GSM), Universal Mobile Telecommunications System (UMTS), Time Division Multiple Access (TDMA), Frequency Division Multiple Access (FDMA), Transmission Control Protocol/Internet Protocol (TCP/IP), Short Messaging Service (SMS), Multimedia Messaging Service (MMS), e-mail, Instant Messaging Service (IMS), Bluetooth, IEEE 802.11, etc.

An electronic device in accordance with embodiments of the present invention may include at least a processor and a memory unit. The device may further include various communication interface circuitry, and codec circuitry.

Various embodiments described herein are described in the general context of method steps or processes, which may be implemented in one embodiment by a software program product or component, embodied in a computer or machine-readable medium, including executable instructions, such as program code, executed by entities in networked environments. Generally, program modules may include routines, programs, objects, components, data structures, etc. that perform particular tasks or implement particular abstract data types. Executable instructions, associated data structures, and program modules represent examples of program code for executing steps of the methods disclosed herein. The particular sequence of such executable instructions or associated data structures represents examples of corresponding acts for implementing the functions described in such steps or processes.

Software implementations of various embodiments of the present invention can be accomplished with standard programming techniques with rule-based logic and other logic to accomplish various database searching steps or processes, correlation steps or processes, comparison steps or processes and decision steps or processes.

The foregoing description of various embodiments have been presented for purposes of illustration and description. The foregoing description is not intended to be exhaustive or to limit embodiments of the present invention to the precise form disclosed, and modifications and variations are possible in light of the above teachings or may be acquired from practice of various embodiments of the present invention. The embodiments discussed herein were chosen and described in order to explain the principles and the nature of various embodiments of the present invention and its practical application to enable one skilled in the art to utilize the present invention in various embodiments and with various modifications as are suited to the particular use contemplated. The features of the embodiments described herein may be combined in all possible combinations of methods, apparatus, modules, systems, and computer program products.

## Claims

1. A method of data packet retransmission, comprising:
determining that a data packet to be received is missing;
transmitting to a router, a request packet to request retransmission of the data packet; and
receiving the retransmitted data packet directly from the router.

2. The method of claim 1 further comprising, prior to retransmission of the data packet, determining whether the data packet comprises one of a Transport Control Protocol packet and a User Datagram Protocol packet, and retransmitting the data packet only if the data packet comprises the Transport Control Protocol packet and/or wherein the request packet comprises a Transport Control Protocol acknowledgement packet and/or wherein the data packet is received at a wireless Local Area Network client.

3. The method of claim 1, wherein prior to determining that the data packet to be received is missing, the data packet is received at the router from a server and optionally further comprising, saving the data packet in a buffer at the router.

4. A computer program product, embodied on a computer-readable medium, comprising machine-executable computer code configured to perform the processes of claim 1.

5. An electronic apparatus, comprising:
a processor; and
a memory unit operatively connected to the processor and including:
machine-executable computer code configured to determine that a data packet to be received is missing;
machine-executable computer code configured to transmit to a router, a request packet to request retransmission of the data packet; and
machine-executable computer code configured to receive the retransmitted data packet directly from the router.

6. The electronic apparatus of claim 5, wherein the memory unit further comprises machine-executable computer code configured to, prior to retransmission of the data packet, determine whether the data packet comprises one of a Transport Control Protocol packet and a User Datagram Protocol packet, and retransmit the data packet only if the data packet comprises the Transport Control Protocol packet and/or wherein the request packet comprises a Transport Control Protocol acknowledgement packet.

7. The electronic apparatus of claim 5, wherein prior to determining that the data packet to be received is missing, the data packet is received at the router from a server and optionally wherein the memory unit further comprises machine-executable computer code configured to save the data packet in a buffer at the router.

8. A method of data packet retransmission, comprising:
receiving a data packet;
saving the data packet;
receiving a retransmission request packet indicative of a request to retransmit the data packet;
retransmitting the data packet in response to the request.

9. The method of claim 8, further comprising, prior to the retransmitting of the data packet, determining whether the data packet comprises one of a Transport Control Protocol packet and a User Datagram Protocol packet, and performing the retransmitting of the data packet only if the data packet comprises the Transport Control Protocol packet and/or wherein the retransmission request packet comprises a Transport Control Protocol acknowledgement packet and/or wherein the data packet is received from a server and/or wherein the data packet is retransmitted directly to a wireless Local Area Network client and/or wherein the data packet is saved at a router.

10. A computer program product, embodied on a computer-readable medium, comprising machine-executable computer code configured to perform the processes of claim 8.

11. An electronic apparatus, comprising:
a processor; and
a memory unit operatively connected to the processor and including:
machine-executable computer code configured to receive a data packet;
machine-executable computer code configured to save the data packet;
machine-executable computer code configured to receive a retransmission request packet indicative of a request to retransmit the data packet;
machine-executable computer code configured to retransmit the data packet in response to the request.

12. The electronic apparatus of claim 11, wherein the memory unit further comprises machine-executable computer code configured to, prior to the retransmission of the data packet, determine whether the data packet comprises one of a Transport Control Protocol packet and a User Datagram Protocol packet, and perform the retransmission of the data packet only if the data packet comprises the Transport Control Protocol packet and/or wherein the retransmission request packet comprises a Transport Control Protocol acknowledgement packet and/or wherein the data packet is received from a server and/or wherein the data packet is retransmitted directly to a wireless Local Area Network client.

13. A system for retransmitting data packets, comprising:
a server configured to transmit a data packet;
a router configured to receive the data packet from the server, and store the data packet; and
a wireless Local Area Network client configured to receive the data packet upon a determination that the data packet is missing, the data packet being retransmitted directly from the router and in response to a retransmission request packet transmitted from the wireless Local Area Network client to the router.

14. The system of claim 13, wherein, prior to the data packet being retransmitted, the router determines whether the data packet comprises one of a Transport Control Protocol packet and a User Datagram Protocol packet, and perform the retransmission of the data packet only if the data packet comprises the Transport Control Protocol packet and/or wherein the retransmission request packet comprises a Transport Control Protocol acknowledgement packet.
